# EUROPÄISCHE PATENTSCHRIFT

(11) **EP 2 512 712 B1**
(45) Veröffentlichungstag und Bekanntmachung des Hinweises auf die Patenterteilung: **16.08.2017**
(21) Anmeldenummer: 10768253.6
(22) Anmeldetag: 25.10.2010
(51) Int. Cl.: B23D 49/16, B23D 51/02

(54) **HANDWERKZEUGMASCHINE**
HAND-HELD MACHINE TOOL
MACHINE-OUTIL PORTATIVE

(30) Priorität: 17.12.2009 DE 102009054810
(43) Veröffentlichungstag der Anmeldung: 24.10.2012
(73) Patentinhaber: Robert Bosch GmbH, 70442 Stuttgart (DE)
(72) Erfinder: STOOSS, Paul, CH-4534 Flumenthal (CH); ARN, Andreas, CH-4513 Langendorf SO (CH); MIRACCO, Sergio, CH-4563 Gerlafingen SO (CH)
(86) Internationale Anmeldenummer: PCT/EP2010/066025
(87) Internationale Veröffentlichungsnummer: WO 2011/072922

(56) Entgegenhaltungen:
- EP-A1- 0 716 898
- EP-A1- 1 586 399
- EP-A2- 0 970 771
- EP-A2- 2 039 454
- DE-A1-102004 024 280
- US-A- 3 087 519
- US-A- 4 730 397

## Beschreibung

Die Erfindung bezieht sich auf eine Handwerkzeugmaschine mit einer an einem Gehäuse gehaltenen, auf eine Arbeitsfläche aufzusetzenden Fußplatte nach dem Oberbegriff des Anspruches 1.

### Stand der Technik

Aus der DE 10 204 024 280 A1 ist eine solche Handwerkzeugmaschine gemäß dem Oberbegriff des Anspruchs 1 als Stich- oder Säbelsäge einsetzbare Universalsäge bekannt, deren Sägeblatt von einem Antriebsmotor angetrieben eine hin und her gehende Arbeitsbewegung bezüglich des Gehäuses der Säge ausführt. Die Säge ist mit einer Fußplatte versehen, die auf einer Arbeitsfläche aufliegt und mit dem Gehäuse verbunden ist. In die Fußplatte ist eine Ausnehmung eingebracht, durch die das Sägeblatt zur Bearbeitung des darunterliegenden Werkstückes hindurchgeführt ist. Die Fußplatte ist in einer ersten Arbeitsstellung starr am Gehäuse der Säge verrastbar, wobei in der ersten Arbeitsstellung die Richtung der Arbeitsbewegung des Sägeblatts senkrecht zur Ebene der Fußplatte steht. Die Fußplatte kann in weiteren Arbeitsstellungen in verschiedenen Winkellagen gegenüber der Arbeitsbewegungsrichtung arretiert werden. Hierfür ist die Fußplatte mit zwei schwenkbaren Bügeln versehen, von denen ein Bügel fest mit dem Gehäuse der Säge und der zweite Bügel axial verstellbar am Gehäuse verbunden ist. Je nach axialer Arretierungsposition des verstellbaren Bügels am Gehäuse der Säge stellt sich auf Grund der schwenkbaren Lagerung der Fußplatte an den Bügeln ein unterschiedlicher Winkel der Fußplatte bezogen auf eine Ebene senkrecht zur Sägeblattachse ein.

Die EP 2 039 454 A2 zeigt eine Stichsäge mit einer Fußplatte, die über eine Arretiereinrichtung am Gehäuse der Stichsäge befestigt ist. Die Arretiereinrichtung umfasst einen Arretierhebel, der eine Mutter verdreht, in der ein Gewindeende
eines Schraubbolzens aufgenommen ist. Der Schraubbolzen ist durch eine Ausnehmung in einer Fußplatte geführt. Bei einer manuellen Betätigung des Arretierhebels kann der Schraubbolzen angezogen oder gelöst werden, wodurch auch die Fußplatte gegenüber dem Gehäuse der Stichsäge gesichert bzw. gelöst wird. In der gelösten Position kann die Position der Fußplatte manuell justiert werden.

Die EP 1 586 399 A1 offenbart eine Stichsäge, deren Fußplatte über eine Arretiervorrichtung zwischen einer arretierten und einer gelösten Position zu verstellen ist, wobei die Arretiervorrichtung einen Arretierhebel, der einen Nocken verdreht, sowie einen Gegennocken umfasst, wobei die Nocken in verriegelter Position formschlüssig ineinandergreifen und in entriegelter Position axial beabstandet sind. In der entriegelten Position ist die Fußplatte gelöst und kann manuell verstellt werden.

### Offenbarung der Erfindung

Der Erfindung liegt die Aufgabe zu Grunde, mit einfachen konstruktiven Maßnahmen die Position einer Fußplatte in einer Handwerkzeugmaschine bezogen auf das Gehäuse einstellen zu können.

Diese Aufgabe wird erfindungsgemäß mit den Merkmalen des Anspruches 1 gelöst. Die Unteransprüche geben zweckmäßige Weiterbildungen an.

Bei der erfindungsgemäßen Handwerkzeugmaschine handelt es sich beispielsweise um eine Säge, insbesondere eine Stichsäge, wobei grundsätzlich im Rahmen der Erfindung auch sonstige Handwerkzeugmaschinen in Betracht kommen, die eine Fußplatte an einem Gehäuse der Handwerkzeugmaschine aufweisen. Mittels der erfindungsgemäßen Ausführung ist die Relativposition zwischen der Fußplatte und dem Gehäuse der Handwerkzeugmaschine mit einfachen Maßnahmen einzustellen. Hierzu ist eine Justiereinrichtung vorgesehen, die ein mit einem Verstellabschnitt versehenes Stellglied umfasst, welches zwischen dem Gehäuse und der Fußplatte angeordnet ist und an einem dieser Bauteile - also entweder am Gehäuse oder an der Fußplatte - gehalten ist. Der Verstellabschnitt des Stellglieds ist am anderen Bauteil in einer Kontaktausnehmung verstellbar aufgenommen, wobei das Stellglied in der Lage ist, eine Verstellbewegung auszuführen und sich bei der Verstellbewegung die Lage des Verstellabschnitts in der Kontaktausnehmung ändert. Der Verstellabschnitt berührt eine oder mehrere Wandungen der Kontaktausnehmung, wobei während der Verstellbewegung die Relativposition der Fußplatte gegenüber dem Gehäuse der Handwerkzeugmaschine geändert wird.

Mit dieser Ausführung ist es möglich, über eine Betätigung des Stellglieds eine Verstellung der Fußplatte gegenüber dem Gehäuse zu erreichen, wobei mit der Betätigung des Stellglieds zugleich die Verstellbewegung erzeugt wird, die zu der Lageänderung der Fußplatte führt. Im Unterschied zu Ausführungen aus dem Stand der Technik muss somit die Lage der Fußplatte bei gelöster Arretierung nicht von Hand eingestellt werden, vielmehr erfolgt die Lageeinstellung und Justierung über das Stellglied. Bei einer entsprechend gewählten Übersetzung von der Stellbewegung des Stellglieds in eine Positionsänderung der Fußplatte ist eine präzise Justierung der Fußplatte möglich. Beispielsweise kann ein Untersetzungsverhältnis gewählt werden, so dass sich große Lageänderungen des Stellglieds in kleine Lageänderungen der Fußplatte auswirken. Auf diese Weise wird die Präzision der Einstellung erhöht.

Je nach Art und Weise der Stellbewegung sowie der Beaufschlagung der Wandungen in der Kontaktausnehmung können verschiedene Fußplattenbewegungen erzeugt werden. Grundsätzlich möglich sind sowohl translatorische als auch rotatorische oder gemischt translatorisch-rotatorische Fußplattenbewegungen in einer oder in mehreren Ebenen bzw. um eine oder mehrere Achsen. Gemäß einer bevorzugten Ausführung ist vorgesehen, dass die Verstellbewegung des Stellglieds eine Rotationsbewegung um die Stellglied-Längsachse ist und der Verstellabschnitt als ein Exzenterabschnitt ausgeführt ist, welcher in der Kontaktausnehmung liegt. Die Kontaktausnehmung besitzt einen nicht-runden Querschnitt, so dass der Exzenterabschnitt auf Grund der Exzentrizität zur Stellglied-Längsachse bei einer Drehbewegung des Stellglieds mit verschiedenen Wandabschnitten der Kontaktausnehmung in Kontakt kommt und hierdurch die Relativlage der Fußplatte gegenüber dem Gehäuse der Handwerkzeugmaschine verstellt. Die Bewegung der Fußplatte findet hierbei vorzugsweise in der Fußplattenebene statt, die mit der Ebene der Arbeitsfläche zusammenfällt. Im Falle einer Ausführung der Handwerkzeugmaschine als Stichsäge liegt die Ebene der Fußplatte senkrecht zur Sägeblattachse. Die Bewegung der Fußplatte ist hierbei insbesondere eine Drehbewegung um eine Achse orthogonal zur Fußplattenebene, welche vorzugsweise mit der Längsachse des Sägeblatts zusammenfällt.

Grundsätzlich möglich sind aber auch sonstige Fußplattenbewegungen, die bei einer Betätigung des Stellglieds, welches mit dem Exzenterabschnitt ausgestattet ist, erfolgt. Die Fußplattenbewegung hängt insbesondere von der Anbindung der Fußplatte an das Gehäuse ab sowie darüber hinaus von der Relativposition zwischen dem Exzenterabschnitt und den Wandungen der Kontaktausnehmung.

Gemäß einer weiteren vorteilhaften Ausführung ist vorgesehen, dass die Kontaktausnehmung zwei geradlinige Wandungen aufweist, die winklig zueinander ausgerichtet sind. Die beiden Wandungen nehmen vorzugsweise auch mit einer vertikalen Längsebene durch die Handwerkzeugmaschine jeweils einen Winkel ein, was den Vorteil hat, dass bei einer Drehbewegung des vertikal ausgerichteten, am Gehäuse gehaltenen Stellglieds je nach Drehrichtung verschiedene, entgegengesetzte Winkelauslenkungen der Fußplatte in der Fußplattenebene möglich sind.

Gemäß weiterer vorteilhafter Ausführung ist vorgesehen, dass das Stellglied vertikal im Gehäuse gehalten ist und insbesondere mit dem Gehäuse verschraubt ist. Hierzu weist das Stellglied vorzugsweise ein Außengewinde auf, das in ein korrespondierendes Innengewinde in einer Ausnehmung im Gehäuse ein- bzw. herauszuschrauben ist. Mit der Schraubbewegung führt das Stellglied eine rotatorische Stellbewegung um die Stellglied-Längsachse aus, die über den Exzenterabschnitt auf die Wandungen der Kontaktausnehmung und damit auf die Fußplatte übertragen wird.

In dieser Ausführung ist das Stellglied verliersicher am Gehäuse gehalten und wirkt der Verstellabschnitt am Stellglied auf die Fußplatte. Grundsätzlich möglich ist aber auch eine umgekehrte Anordnung, bei der das Stellglied verliersicher in der Fußplatte gehalten ist und der Verstellabschnitt des Stellglieds auf das Gehäuse wirkt, welches eine Kontaktausnehmung zur Aufnahme des Verstellabschnitts aufweist.

Bei einer Anordnung der Kontaktausnehmung in der Fußplatte und einer verliersicheren Halterung des Stellglieds am Gehäuse ist es zweckmäßig, den Verstellabschnitt an der Stirnseite des Stellglieds anzuordnen und am Verstellabschnitt außerdem einen Werkzeugeingriff vorzusehen. Der Werkzeugeingriff ist beispielsweise als Schlitz an der Stirnfläche des Verstellabschnitts ausgeführt, in den ein Schraubendreher eingreifen kann, um das Stellglied um die Stellglied-Längsachse zu verdrehen. Der Eingriff erfolgt insbesondere über die Unterseite der Fußplatte. Die Kontaktausnehmung ist vorzugsweise benachbart zu der dem Gehäuse zugewandten Oberseite der Fußplatte angeordnet. Das Werkzeug zur Verstellung des Stellglieds wird über die Unterseite der Fußplatte durch eine Ausnehmung im Fußplattengehäuse bis zum Erreichen des Stirnseite des Stellglieds hindurchgeführt.

Gemäß einer weiteren zweckmäßigen Ausführung ist ein Federelement vorgesehen, welches das Stellglied am Verstellabschnitt oder benachbart zu diesem kraftbeaufschlagt. Die Kraftrichtung des Federelementes liegt quer zur Achse der Verstellbewegung des Verstellglieds und führt zu einer spielfreien Aufnahme des Verstellabschnitts in der Kontaktausnehmung. Hierbei kann es zweckmäßig sein, zwischen dem Federelement und dem Stellglied ein Übertragungsglied vorzusehen, beispielsweise eine Hülse oder ein Bolzen, die bzw. der gegen das Stellglied drückt.

Weitere Vorteile und zweckmäßige Ausführungen sind den weiteren Ansprüchen, der Figurenbeschreibung und den Zeichnungen zu entnehmen. Es zeigen:
- Fig. 1: in perspektivischer Ansicht eine Fußplatte einer Handwerkzeugmaschine, die an ihrer Oberseite eine Kontaktausnehmung zur Aufnahme eines Exzenterabschnitts eines Stellglieds aufweist,
- Fig. 2: einen Schnitt durch die Fußplatte,
- Fig. 3: die Fußplatte in einer Ansicht von unten,
- Fig. 4: ein Stellglied mit einem Exzenterabschnitt zur Verstellung der Fußplatte gegenüber dem Gehäuse der Handwerkzeugmaschine,
- Fig. 5: eine Ansicht der Stirnseite des Stellglieds, welches in der Kontaktausnehmung in der Fußplatte aufgenommen ist.

In den Figuren sind gleiche Bauteile mit gleichen Bezugszeichen versehen.

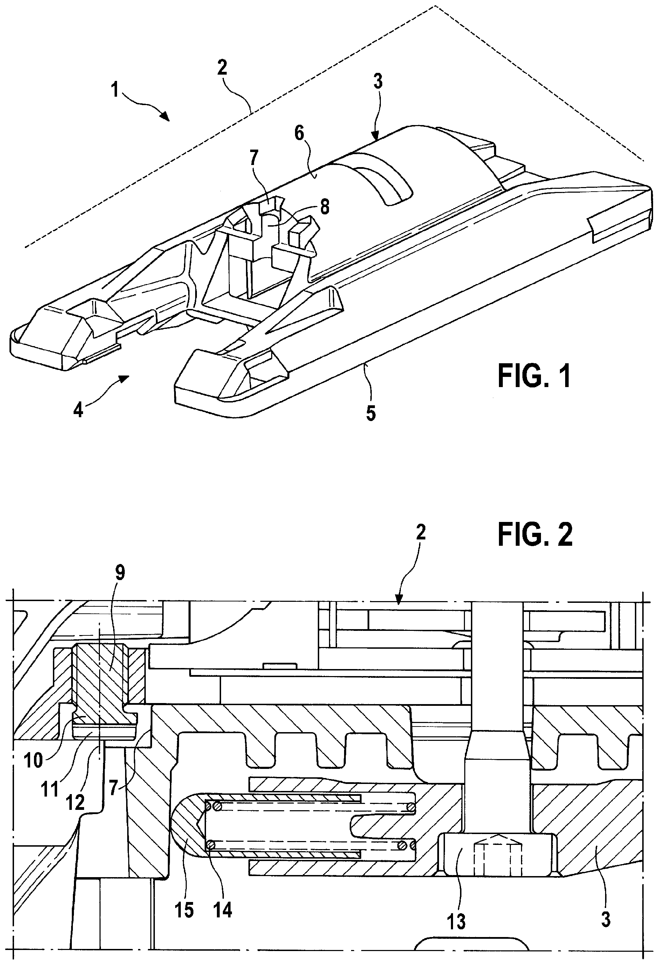

Fig. 1 zeigt die Fußplatte 3 als Bestandteil einer Handwerkzeugmaschine 1, insbesondere einer Stichsäge, die ein nur schematisch dargestelltes Gehäuse 2 aufweist, mit dem die Fußplatte 3 verbunden ist. Die Fußplatte 3 besitzt einen vorderen, in Vorschubrichtung vorne liegenden Arbeitsbereich 4, der als etwa U-förmige Ausnehmung ausgeführt ist und durch den das Arbeitswerkzeug, das insbesondere als Sägeblatt ausgeführt ist, zur Bearbeitung eines Werkstücks hindurchgeführt ist. Die Unterseite 5 der Fußplatte 3 liegt auf einer Arbeitsfläche auf.

Im Bereich der dem Gehäuse 2 zugewandten Oberseite 6 weist die Fußplatte 3 eine Kontaktausnehmung 7 auf, die zur Aufnahme eines Stellglieds dient, über das die Relativposition der Fußplatte 3 gegenüber dem Gehäuse 2 eingestellt werden kann. Die Kontaktausnehmung 7 weist zwei winklig zueinander ausgerichtete Wandungen auf und ist zur Vorderseite der Fußplatte hin mit einem sich erweiternden Konuswinkel offen ausgeführt. Die Kontaktausnehmung 7 fluchtet mit einem Durchgang 8 im Gehäuse der Fußplatte 3, der sich vertikal durch das Gehäuse erstreckt, so dass über den Durchgang 8 die Kontaktausnehmung 7 von der Unterseite 5 der Fußplatte 3 zu erreichen ist. Auf diese Weise wird eine Möglichkeit geschaffen, das von oben in die Kontaktausnehmung 7 einragende Stellglied über ein von unten über den Durchgang 8 einzuführendes Werkzeug zu verstellen.

Wie der Schnittdarstellung gemäß Fig. 2 zu entnehmen, ragt in die Kontaktausnehmung 7 von oben ein Stellglied 9 mit einem Verstellabschnitt 10 ein, wobei der Verstellabschnitt 10 als Exzenterabschnitt ausgeführt und in der Kontaktausnehmung 7 aufgenommen ist. Der Exzenterabschnitt 10 befindet sich an der Stirnseite des Stellglieds 9, die axiale Stirnfläche des Exzenterabschnitts 10 ist mit einem Werkzeugeingriff 11 versehen, welcher insbesondere schlitzförmig ausgeführt ist. In den Werkzeugeingriff 11 kann ein Werkzeug von unten eingeführt werden, um das Stellglied 9 um seine Längsachse 12 zu verdrehen.

Im oberen, dem Exzenterabschnitt 10 abgewandten Bereich ist das Stellglied 9 im Gehäuse 2 aufgenommen, insbesondere in das Gehäuse 2 eingeschraubt. Bei einer Drehbewegung des Stellglieds 9 um seine Längsachse 12, erzeugt über ein Werkzeug, das in den Werkzeugeingriff 11 eingreift, bewegt sich der Exzenterabschnitt 10 in der Kontaktausnehmung 7 in der Fußplatte 3 und verstellt die Fußplatte 3 gegenüber dem Gehäuse 2. Die Fußplattenbewegung liegt in der Ebene der Fußplatte, also parallel zur Arbeitsfläche bzw. zur Unterseite 5 der Fußplatte. Die Fußplattenbewegung ist vorzugsweise eine Drehbewegung, wobei grundsätzlich auch translatorische Verschiebebewegungen in Betracht kommen.

In der Fußplatte 3 ist ein Federelement 14 angeordnet, das über ein zwischenliegendes, hülsenförmiges Übertragungsglied 15 das Stellglied 9 senkrecht zu dessen Längsachse 12 kraftbeaufschlagt. Das Federelement 14 drückt die Fußplatte quer zur Längsachse 12 gegen das Stellglied 9, so dass das Stellglied 9 ohne Spiel und mit Kraftbeaufschlagung in der halboffenen Kontaktausnehmung 7 liegt, die sich zu Ihrer geschlossenen Seite hin konisch verjüngt. Das Federelement 14 ist als Druckfeder ausgeführt.

Desweiteren ist in Fig. 2 eine Schraube 13 zu erkennen, die parallel versetzt zum Stellglied 9 angeordnet ist und ebenfalls die Fußplatte 3 mit dem Gehäuse 2 erbindet.

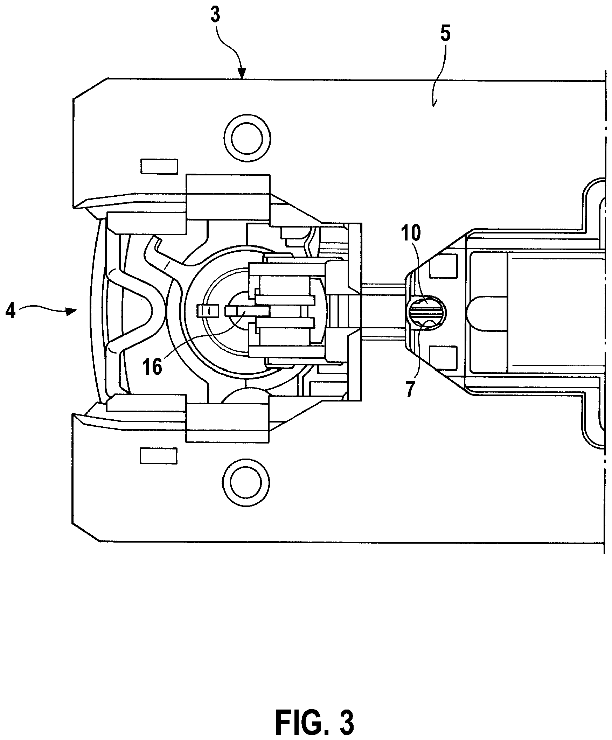

In Fig. 3 ist die Handwerkzeugmaschine in einer Ansicht von unten dargestellt. Zu erkennen ist die Unterseite 5 der Fußplatte 3 mit dem Exzenterabschnitt 10 in der Kontaktausnehmung 7, welche halboffen ausgeführt ist, wobei sich die offene Seite zum vorderen Arbeitsbereich 4 hin erstreckt.

Zu erkennen ist in Fig. 3 außerdem das Sägeblatt 16, das durch den offenen Arbeitsbereich 4 im vorderen Bereich der Fußplatte 3 hindurchgeführt ist.

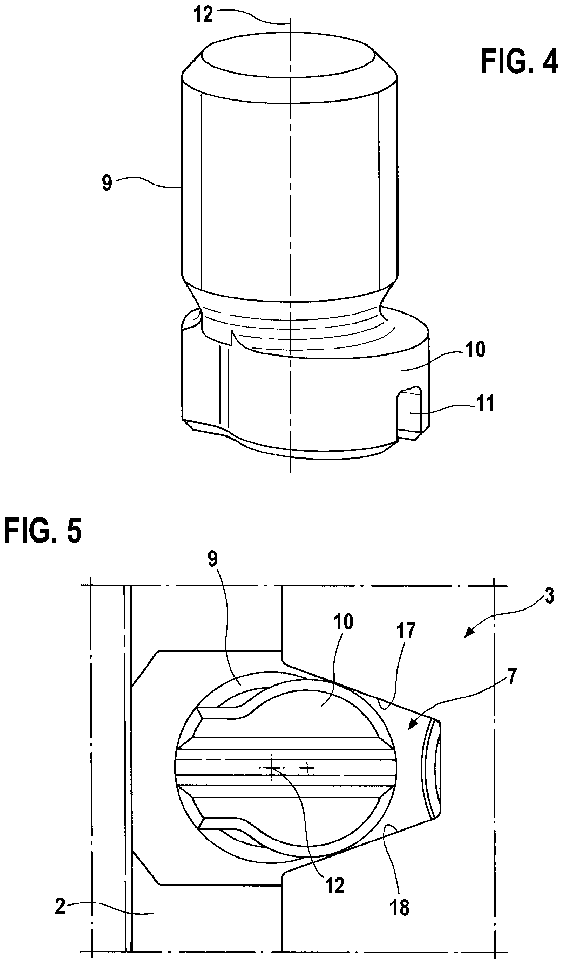

Fig. 4 zeigt eine Einzeldarstellung des Stellglieds 9 mit dem exzentrischen Verstellabschnitt 10 im Bereich der Stirnseite des Stellglieds. Bezogen auf die Längsachse 12 ist der Exzenterabschnitt 10 nicht-rotationssymmetrisch ausgeführt, so dass bei einer Drehung um die Längachse 12 verschiedene Abschnitte der Umfangswand am Exzenterabschnitt 10 mit unterschiedlichem Radius in Anlage mit der Wandung in der Kontaktausnehmung gelangen.

Der schlitzförmige Werkzeugeingriff 11 im Bereich der Stirnfläche des Exzenterabschnitts 10 erstreckt sich quer zur Längsachse des Stellglieds und in Längsrichtung des Exzenterabschnitts.

In Fig. 5 ist in Einzeldarstellung das Stellglied 9 mit dem Exzenterabschnitt 10 im eingebauten Zustand im Gehäuse 2 bzw. der Fußplatte 3 dargestellt. Zu erkennen ist, dass die Kontaktausnehmung 7 zwei winklig zueinander ausgerichtete Wandungen 17 und 18 aufweist, die sich V-förmig zur Vorderseite der Fußplatte hin öffnen. Der Exzenterabschnitt 10 liegt an den beiden Wandungen 17, 18 auf Kontakt an, wobei je nach Drehrichtung um die Längsachse 12 die eine oder die andere Wandung 17, 18 von dem Exzenterabschnitt 10 kraftbeaufschlagt und verstellt wird.

## Patentansprüche

1. Handwerkzeugmaschine, mit einer auf eine Arbeitsfläche aufzusetzenden Fußplatte (3), die an einem Gehäuse (2) der Handwerkzeugmaschine (1) gehalten ist, und mit einer Justiereinrichtung zur Einstellung der Relativposition der Fußplatte (3) gegenüber dem Gehäuse (2), wobei die Justiereinrichtung ein mit einem Verstellabschnitt (10) versehenes Stellglied (9) umfasst, das zwischen Gehäuse (2) und Fußplatte (3) angeordnet und an einem dieser Bauteile gehalten ist, dass der Verstellabschnitt (10) des Stellglieds (9) am anderen Bauteil in einer Kontaktausnehmung (7) verstellbar aufgenommen ist, und dass das Stellglied (9) eine Verstellbewegung ausführt, bei der sich die Lage des Verstellabschnitts (10) in der Kontaktausnehmung (7) ändert, **dadurch gekennzeichnet, dass** der Verstellabschnitt (10) eine oder mehrere Wandungen der Kontaktausnehmung (7) berührt und während der Verstellbewegung die Relativposition der Fußplatte (3) gegenüber dem Gehäuse (2) der Handwerkzeugmaschine (1) geändert wird.

2. Handwerkzeugmaschine nach Anspruch 1, **dadurch gekennzeichnet, dass** die Verstellbewegung des Stellglieds (9) eine Rotationsbewegung um die Stellglied-Längsachse (12) und der Verstellabschnitt (10) als Exzenterabschnitt ausgeführt ist und dass die Kontaktausnehmung (7) einen nicht-runden Querschnitt aufweist.

3. Handwerkzeugmaschine nach Anspruch 1 oder 2, **dadurch gekennzeichnet, dass** der Verstellabschnitt (10) am Kopf des Stellglieds (9) ausgebildet ist.

4. Handwerkzeugmaschine nach einem der Ansprüche 1 bis 3, **dadurch gekennzeichnet, dass** das Stellglied (9) mit einem Gewinde versehen ist, das mit einem korrespondierenden Gewinde in einem Bauteil zu verschrauben ist.

5. Handwerkzeugmaschine nach einem der Ansprüche 1 bis 4, **dadurch gekennzeichnet, dass** sich die Kontaktausnehmung (7) in der Fußplatte (3) befindet.

6. Handwerkzeugmaschine nach Anspruch 5, **dadurch gekennzeichnet, dass** die Kontaktausnehmung (7) benachbart zu der dem Gehäuse (2) zugewandten Oberseite (6) angeordnet ist.

7. Handwerkzeugmaschine nach einem der Ansprüche 1 bis 6, **dadurch gekennzeichnet, dass** die Kontaktausnehmung (7) zwei geradlinige Wandungen (17, 18) aufweist, die winklig zueinander ausgerichtet sind.

8. Handwerkzeugmaschine nach einem der Ansprüche 1 bis 7, **dadurch gekennzeichnet, dass** das Stellglied (9) am oder benachbart zum Verstellabschnitt (10) quer zur Achse der Verstellbewegung von einem Federelement (14) kraftbeaufschlagt ist.

9. Handwerkzeugmaschine nach Anspruch 8, **dadurch gekennzeichnet, dass** das Federelement (14) ein Übertragungsglied (15) gegen das Stellglied (9) drückt.

10. Handwerkzeugmaschine nach einem der Ansprüche 1 bis 8, **dadurch gekennzeichnet, dass** das Stellglied (9) am Verstellabschnitt (10) mit einem Werkzeugeingriff (11) versehen ist.

## Claims

1. Portable power tool having a sole plate (3) to be placed on a work surface, said sole plate (3) being held on a housing (2) of the portable power tool (1), and having an adjusting device for setting the relative position of the sole plate (3) with respect to the housing (2), wherein the adjusting device comprises an actuator (9) that is provided with an adjustment portion (10), is arranged between the housing (2) and sole plate (3) and is held on one of said components, in that the adjustment portion (10) of the actuator (9) is received on the other component in an adjustable manner in a contact recess (7), and in that the actuator (9) executes an adjustment movement in which the position of the adjustment portion (10) in the contact recess (7) changes, **characterized in that** the adjustment portion (10) touches one or more walls of the contact recess (7), and during the adjustment movement, the relative position of the sole plate (3) with respect to the housing (2) of the portable power tool (1) is changed.

2. Portable power tool according to Claim 1, **characterized in that** the adjustment movement of the actuator (9) is a rotary movement about the actuator longitudinal axis (12) and the adjustment portion (10) is embodied as an eccentric portion, and **in that** the contact recess (7) has a non-round cross section.

3. Portable power tool according to Claim 1 or 2, **characterized in that** the adjustment portion (10) is formed at the top of the actuator (9).

4. Portable power tool according to one of Claims 1 to 3, **characterized in that** the actuator (9) is provided with a thread which is intended to be screwed together with a corresponding thread in a component.

5. Portable power tool according to one of Claims 1 to 4, **characterized in that** the contact recess (7) is located in the sole plate (3).

6. Portable power tool according to Claim 5, **characterized in that** the contact recess (7) is arranged adjacently to the top side (6) facing the housing (2).

7. Portable power tool according to one of Claims 1 to 6, **characterized in that** the contact recess (7) has two rectilinear walls (17, 18) which are oriented at an angle to one another.

8. Portable power tool according to one of Claims 1 to 7, **characterized in that** the actuator (9) is subjected, on or adjacent to the adjustment portion (10), to the force of a spring element (14) transversely to the axis of the adjustment movement.

9. Portable power tool according to Claim 8, **characterized in that** the spring element (14) presses a transmission member (15) against the actuator (9).

10. Portable power tool according to one of Claims 1 to 8, **characterized in that** the actuator (9) is provided with a tool engagement means (11) on the adjustment portion (10).

## Revendications

1. Machine-outil portative, avec une plaque de pied (3) à poser sur une face de travail, qui est maintenue sur un boîtier (2) de la machine-outil portative (1), et avec un dispositif d'ajustement pour le réglage de la position relative de la plaque de pied (3) par rapport au boîtier (2), dans laquelle le dispositif d'ajustement comprend un organe de réglage (9) muni d'une partie de réglage (10), qui est disposé entre le boîtier (2) et la plaque de pied (3) et qui est maintenu sur un de ces composants, en ce que la partie de réglage (10) de l'organe de réglage (9) est logée sur l'autre composant de façon déplaçable dans un évidement de contact (7), et en ce que l'organe de réglage (9) accomplit un mouvement de réglage, au cours duquel la position de la partie de réglage (10) dans l'évidement de contact (7) change, **caractérisée en ce que** la partie de réglage (10) touche une ou plusieurs paroi(s) de l'évidement de contact (7) et la position relative de la plaque de pied (3) par rapport au boîtier (2) de la machine-outil portative (1) est modifiée pendant le mouvement de réglage.

2. Machine-outil portative selon la revendication 1, **caractérisée en ce que** le mouvement de réglage de l'organe de réglage (9) est un mouvement de rotation autour de l'axe longitudinal (12) de l'organe de réglage et la partie de réglage (10) est réalisée en forme de partie excentrique et **en ce que** l'évidement de contact (7) présente une section transversale non circulaire.

3. Machine-outil portative selon la revendication 1 ou 2, **caractérisée en ce que** la partie de réglage (10) est formée sur la tête de l'organe de réglage (9).

4. Machine-outil portative selon l'une quelconque des revendications 1 à 3, **caractérisée en ce que** l'organe de réglage (9) est muni d'un filet, qui est destiné à être vissé avec un filet correspondant dans un composant.

5. Machine-outil portative selon l'une quelconque des revendications 1 à 4, **caractérisée en ce que** l'évidement de contact (7) se trouve dans la plaque de pied (3).

6. Machine-outil portative selon la revendication 5, **caractérisée en ce que** l'évidement de contact (7) est disposé au voisinage du côté supérieur (6) tourné vers le boîtier (2).

7. Machine-outil portative selon l'une quelconque des revendications 1 à 6, **caractérisée en ce que** l'évidement de contact (7) présente deux parois rectilignes (17, 18), qui sont orientées en formant un angle l'une par rapport à l'autre.

8. Machine-outil portative selon l'une quelconque des revendications 1 à 7, **caractérisée en ce que** l'organe de réglage (9) est soumis à une force par un élément de ressort (14) à la ou au voisinage de la partie de réglage (10) transversalement à l'axe du mouvement de réglage.

9. Machine-outil portative selon la revendication 8, **caractérisée en ce que** l'élément de ressort (14) presse un élément de transmission (15) contre l'organe de réglage (9).

10. Machine-outil portative selon l'une quelconque des revendications 1 à 8, **caractérisée en ce que** l'organe de réglage (9) est muni sur la partie de réglage (10) d'un moyen de prise d'outil (11).
